# EUROPEAN PATENT SPECIFICATION

(11) **EP 4 652 129 B1**
(45) Date of publication and mention of the grant of the patent: **04.11.2026**
(21) Application number: 23701185.3
(22) Date of filing: 16.01.2023
(51) Int. Cl.: B66B 1/30, H02P 21/16, H02P 23/14

(54) **METHOD FOR DETERMINING TORQUE CONSTANT OF HOISTING MOTOR OF ELEVATOR, ELEVATOR CONTROL UNIT, ELEVATOR SYSTEM, AND COMPUTER-READABLE MEMORY MEDIUM**
VERFAHREN ZUR BESTIMMUNG DER DREHMOMENTKONSTANTE DES HUBMOTORS EINES AUFZUGS, AUFZUGSSTEUEREINHEIT, AUFZUGSSYSTEM UND COMPUTERLESBARES SPEICHERMEDIUM
PROCÉDÉ DE DÉTERMINATION DE CONSTANTE DE COUPLE DE MOTEUR DE LEVAGE D'ASCENSEUR, UNITÉ DE COMMANDE D'ASCENSEUR, SYSTÈME D'ASCENSEUR ET SUPPORT DE MÉMOIRE LISIBLE PAR ORDINATEUR

(43) Date of publication of application: 26.11.2025
(73) Proprietor: KONE Corporation, 00330 Helsinki (FI)
(72) Inventor: TYNI, Tapio, 00330 HELSINKI (FI); PERÄLÄ, Pekka, 00330 HELSINKI (FI); TUKIA, Toni, 00330 HELSINKI (FI); SALOMÄKI, Janne, 00330 HELSINKI (FI)
(74) Representative: Berggren Oy
(86) International application number: PCT/FI2023/050034
(87) International publication number: WO 2024/153849

(56) References cited:
- US-A- 5 880 416
- US-A- 5 883 344
- US-A1- 2010 078 267
- US-B1- 6 320 338

## Description

### FIELD OF THE INVENTION

The present invention relates in general to elevator systems and hoisting motors thereof.

In particular, however, not exclusively, the present invention concerns methods, control units, and computer-readable memory medium used in elevator systems for determining a torque constant of a hoisting motor.

### BACKGROUND

Elevator car is transferred in elevator shaft through landings by means of an elevator hoisting motor, such as a permanent magnet motor. Movement of the car is controlled by supplying current to the hoisting motor through a frequency converter.

Motor current is adjusted by the frequency converter, to control movement of the car. High ride quality is required in modern elevators. Movement of the car should be smooth and comfortable for elevator passengers.

Smooth and comfortable ride requires that control unit of the frequency converter has as accurate as possible motor control parameters. On the other hand, control parameters are commonly determined for a certain motor type, which means there may be tolerances and deviation between individual hoisting motors.

Normally in known elevator machinery, a nominal torque constant, that is a KTC-value, is printed on the motor plate and is defined during the motor type tests. Currently, the drive units do not use the provided KTC value, as it is found to be too inaccurate. Instead, a substitute is calculated from the nominal current and power values, which in many cases lead even more inaccurate estimations for the KTC parameter. KTC is an important parameter for movement control of an elevator car as it tells how much motor current is needed for generating certain amount of motor torque. US 5 883 344 A discloses a method and control unit for determining a torque constant of a hoisting motor of an elevator.

### SUMMARY

An objective of the present invention is to provide a method for determining a torque constant of a hoisting motor of an elevator, an elevator control unit, an elevator system, and a computer-readable memory medium. Another objective of the present invention is that the method, the elevator control unit, the elevator system, and the computer-readable memory medium a solution for determining an elevator and hoisting motor specific torque constant which improves accuracy and eliminates possible errors in the parameter determination process.

The objectives of the invention are reached by a method for determining a torque constant of a hoisting motor of an elevator, an elevator control unit, an elevator system, and a computer-readable memory medium as defined by the respective independent claims.

According to a first aspect, a method for determining a torque constant of a hoisting motor of an elevator system according to claim 1 is provided.

The roundtrip may include only a part of the elevator shaft in the longitudinal direction thereof with an empty load, or the roundtrip may be a ride between the bottom floor and the top floor with an empty load, that is cover the whole elevator shaft.

Furthermore, the elevator balance refers to a measure of imbalance between the elevator car and its counterweight, especially at a reference point, such as a middle point of the elevator shaft. As a non-limiting example, if the empty elevator car is perfectly balanced with its counterweight (being connected to each other by force transmission elements/devices) at the reference point, the elevator balance would be zero. This would mean that the hoisting motor would draw the same amount of electric power regardless of whether the empty elevator car is moved in the first or the opposite second direction from the reference point, such as the middle point of the shaft.

Regarding the constant speed portions, in them, the elevator car may preferably be arranged to move past the middle point of the elevator shaft. Thus, the roundtrip should at least cover the section of the elevator shaft comprising the middle point, regardless of whether the roundtrip includes only a part of the shaft or the whole shaft.

Alternatively or in addition, in both of the constant speed portions, that is in both directions, the elevator car may be arranged to move in the same section of the elevator shaft. Thus, the start and end points of the constant speed regions are the same positions relative to the shaft in both cases, when moving to the first or to the opposite second direction.

According to the invention, the one or more mechanical parameters include at least a traction sheave radius and/or an elevator roping ratio. As understood, these parameters affect the overall balance condition related to the elevator car and its counterweight, and may vary from one elevator system to another.

In some preferable embodiments, the determining the torque constant is based on the following equation: $KTC = \frac{Rts ⋅ \left|MB\right| ⋅ g}{\left(Im,mean⋅Rrope\right)} ,$ where Rts is the traction sheave radius, MB the elevator balance, g the gravitational acceleration, Im,mean the mean value of the motor current, and Rrope the elevator roping ratio.

The roping ratio may refer to the amount of hoisting rope that the hoisting motor has to move in order to raise the elevator car by a desired distance.

In various embodiments, the mean value of motor current Im,mean may be determined based on the following equation: $Im , mean = \frac{1}{K} {\sum }_{n = 1}^{K} Im , n ,$ where K is a number of samples of the motor current during the constant speed portions, and Im,n is a motor current sample.

In various embodiments, information about the elevator balance may be pre-defined prior to, or received or obtained during performing of a test run or even the roundtrip. For example, the elevator balance may have been determined during a previous test run or an elevator commissioning phase, and then stored into the memory to be used in an embodiment of the present invention. The previous test run or commissioning phase may have included moving the elevator car in the elevator shaft, such as with a constant speed, even similarly as during the roundtrip.

Alternatively, in various embodiments, the method may comprise determining the elevator balance based on data collected during the roundtrip. For example, the method may comprise, prior to the determination of the torque constant but during or after the roundtrip, determining the elevator balance based on at least a difference in electric power of the hoisting motor between the constant speed portions, preferably at or on average around the middle point of the elevator shaft.

In some embodiments, the elevator balance may be determined based on the following equation: $MB = \frac{\left(Pme,mid,up-Pme,mid,down\right)}{\left(2⋅g⋅v_cs\right)} ,$ where Pme,mid,up is electric power of the hoisting motor during the constant speed portion in the first direction, Pme,mid,down is electric power of the hoisting motor during the constant speed portion in the second direction, g is the gravitational acceleration, and v_cs an absolute value of speed of the elevator car at the constant speed regions, which may be the same or differ with respect to the nominal speed of the elevator car. Preferably, the electric power values are being determined at or around the middle point of the shaft when the elevator car moves at a constant speed.

According to a second aspect, an elevator control unit according to claim 10 is provided.

The one or more mechanical parameters include at least a traction sheave radius and/or an elevator roping ratio.

Said determining of the torque constant may be based on the following equation: $KTC = \frac{Rts ⋅ \left|MB\right| ⋅ g}{\left(Im,mean⋅Rrope\right)} ,$ where Rts is the traction sheave radius, MB the elevator balance, g the gravitational acceleration, Im,mean the mean value of the motor current, and Rrope the elevator roping ratio.

In various embodiments, the elevator control unit may be configured, prior to the determination of the torque constant, to determine the elevator balance based on at least a difference in electric power of the hoisting motor between the constant speed portions, preferably at or on average around the middle point of the elevator shaft.

According to a third aspect, an elevator system is provided. The elevator system comprises an elevator car movable in an elevator shaft by a hoisting motor, and an elevator control unit in accordance with the second aspect, that is with one or more embodiments thereof.

According to a fourth aspect, there is provided a computer-readable memory medium, such as a non-transitory memory medium, according to claim 15.

The present invention provides a method for determining a torque constant of a hoisting motor of an elevator, an elevator control unit, an elevator system, and a computer-readable memory medium. The present invention provides advantages over known solutions in that an elevator or hoisting motor specific torque constant can be determined easily and accurately. The accurate torque constant is important and needed for many purposes, such as in controlling the motor, including motion control, torque assisted brake test, parameter estimations, energy calculations, etc.

Various other advantages will become clear to a skilled person based on the following detailed description.

The expression "a plurality of" may refer to any positive integer starting from two (2), that is being two, at least two, three, at least three, etc.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in appended claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 shows a flow diagram of a method according to an embodiment of the present invention.
Figure 2 illustrates schematically characteristics of a roundtrip in connection with a method according to an embodiment of the present invention.
Figure 3 illustrates schematically an elevator system according to an embodiment of the present invention.

### DETAILED DESCRIPTION OF SOME EMBODIMENTS

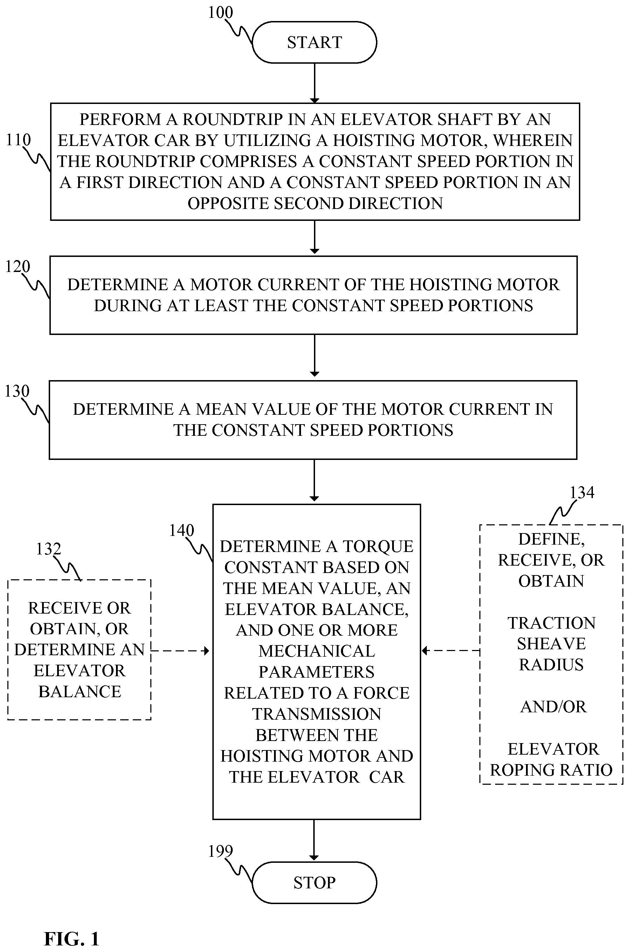

Figure 1 shows a flow diagram of a method according to an embodiment of the present invention. Item, or method step, 100 refers to a start-up phase of the method. Suitable equipment and components may be obtained, and systems assembled and configured for operation. This may mean manufacturing an elevator system and setting it up, or the elevator system may be ready for commissioning and/or test runs. Alternatively, the elevator may have been used already but set (temporarily) into a maintenance mode or the like.

In various embodiments, the elevator may be configured to be in a maintenance mode prior to performing item 110. The maintenance mode differs from a normal operation mode in which the elevator car is arranged to serve landing floors based on elevator car calls. The maintenance mode may be initialized locally or remotely, or even automatically by an elevator control unit when certain conditions for maintenance mode are fulfilled.

In addition, optionally, the method may comprise verifying that the elevator car is empty prior to performing item 110. The verifying may include visual inspection by a maintenance person and/or utilization of a sensor, such as a sensor for determining weight of the car or the loading inside the car, or an optical sensor for determining that the elevator is empty by monitoring the inner space of the car.

Item, or method step, 110 refers to performing a roundtrip in an elevator shaft by an elevator car by utilizing the hoisting motor, wherein the roundtrip comprises a constant speed portion in a first direction and a constant speed portion in a opposite second direction. The first and second directions are, preferably, vertical directions. The first direction may be, for example, upwards and the second direction downwards.

In the constant speed portions, the elevator car may be arranged to move past a middle point of the elevator shaft. In some embodiments, in the constant speed portions, the elevator car is arranged to move in the same section of the elevator shaft, thus also including the middle point.

The roundtrip may include only a part of the elevator shaft in the longitudinal direction thereof with an empty load, or the roundtrip may be a ride between the bottom floor and the top floor with an empty load, that is cover the whole elevator shaft.

Alternatively or in addition, in both of the constant speed portions, that is in both directions, the elevator car may be arranged to move in the same section of the elevator shaft. Thus, the start and end points of the constant speed regions are the same positions relative to the shaft in both cases, when moving to the first or to the opposite second direction.

Item, or method step, 120 refers to determining a motor current of the hoisting motor, such as recording samples thereof, during at least the constant speed portions. The motor current may be determined by an electric converter (or a current sensor thereof) arranged to operate or drive the motor, or by a dedicated current sensor in connection with the elevator control unit, for instance.

Item, or method step, 130 refers to determining a mean value of the motor current in the constant speed portions. The motor current values recorded on both constant speed portions should be taken into account. For example, the mean value of motor current may be determined based on the following equation: $Im , mean = \frac{1}{K} {\sum }_{n = 1}^{K} Im , n ,$ where K is a number of samples of the motor current Im,n during both of the constant speed portions.

Item, or method step, 140 refers to determining the torque constant based on the mean value, an elevator balance, and one or more mechanical parameters related to a force transmission between the hoisting motor and the elevator car.

The elevator balance may refer to a measure of imbalance between the elevator car and its counterweight, especially at a reference point, such as a middle point of the elevator shaft. As a non-limiting example, if the empty elevator car is perfectly balanced with its counterweight (being connected to each other by force transmission elements/devices) at the reference point, the elevator balance would be zero. This would mean that the hoisting motor would draw the same amount of electric power regardless of whether the empty elevator car is moved in the first or the opposite second direction from the reference point, such as the middle point of the shaft.

In various embodiments, the method may comprise, at item 132, determining the elevator balance prior to item 140. For example, it may be received or obtained as pre-defined in the system, or it may be determined based on data collected during a separate, prior test run or during the roundtrip at item 110.

In the method, the characteristics of the mechanical coupling between the hoisting motor and the elevator car are, preferably, taken into account. As understandable, in different elevators, force applied by the hoisting motor to move the elevator car causes different resulting movement of the car, depending on the mechanical parameters of the specific elevator etc.

According to the invention the mechanical parameters include at least a traction sheave radius Rts and an elevator roping ratio Rrope. These may, optionally, be defined, obtained, or received at item 134 in Fig. 1, prior to determining the torque constant.

In some embodiments, said determining the torque constant may be based on the following equation: $KTC = \frac{Rts ⋅ \left|MB\right| ⋅ g}{\left(Im,mean⋅Rrope\right)} ,$ where Rts is the traction sheave radius, MB the elevator balance, g the gravitational acceleration, Im,mean the mean value of the motor current, and Rrope the elevator roping ratio.

Method execution may be stopped at item 199. The determined torque constant may be inputted or stored into memory and optionally used in controlling of the operation of the hoisting motor, such as by an electric converter which may be a frequency converter. As mentioned before, the determined torque constant may be used for various purposes.

In some embodiments, the method may comprise, prior to the determination of the torque constant, determining the elevator balance based on at least a difference in electric power of the hoisting motor between the constant speed portions, preferably at or on average around the middle point of the elevator shaft.

For example, the elevator balance may determined based on the following equation: $MB = \frac{\left(Pme,mid,up-Pme,mid,down\right)}{\left(2⋅g⋅v_cs\right)} ,$ where Pme,mid,up is electric power of the hoisting motor during the constant speed portion in the first direction, Pme,mid,down is electric power of the hoisting motor during the constant speed portion in the second direction, g is the gravitational acceleration, and v_cs an absolute value of the speed of the elevator car at the constant speed regions.

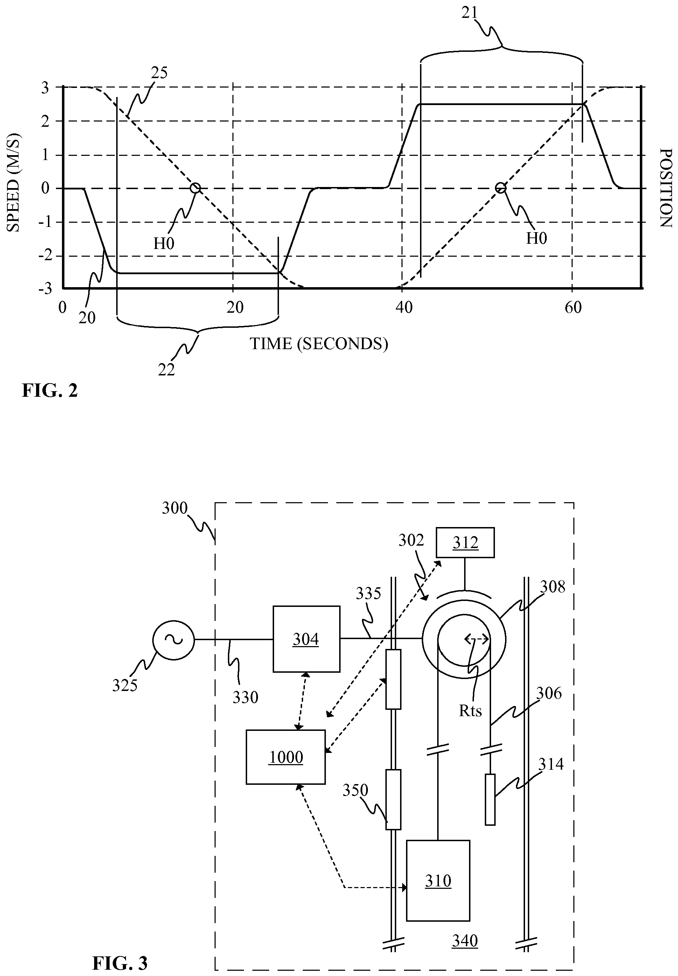

Figure 2 illustrates schematically characteristics of a roundtrip in connection with a method according to an embodiment of the present invention. Fig. 2 illustrates the roundtrip as a graph, on the horizontal axis of which is time (in seconds), on the vertical axis on the left is the speed of the elevator car (in meters per second), and on the vertical axis on the right is the position of the elevator car in the elevator shaft. The units of the position may be meters, such as in relation to the bottommost floor (being zero), or floor numbers or the like.

In Fig. 2, the speed curve is marked with reference sign 20. On the speed curve 20, two constant speed portions 21, 22 are indicated to be between vertical lines. The position curve is marked with reference sign 25. Positive values for speed indicate that the elevator car is moving into the first direction, preferably, upwards. Negative values for speed indicate that the elevator car is moving into the opposite second direction, preferably downwards.

Marked with circles on the position curve 25 are the middle points H0 of the elevator shaft. **In** this graph, the middle point of the shaft coincides with zero speed as visible in the graph. This is merely a choice to make the graph as easily readable as possible.

**In** this particular example, an embodiment is described in which the elevator car covers substantially the same section of the elevator shaft during the two constant speed portions 21, 22 as becomes clear when looking at the portions of the position curve 25 defined by the vertical lines also defining the constant speed portions 21, 22 on the speed curve 20. Furthermore, the middle point H0 of the elevator shaft is, although doesn't necessarily have to be, substantially in the center of the sections of the shaft covered by the elevator car during the constant speed portions 21, 22.

Furthermore, in Fig.2, an example is illustrated where the elevator car is moved from the bottommost floor (coinciding with "-3" on the left vertical axis) to the topmost floor (coinciding with "3" on the right vertical axis). **In** some embodiments, the height of the shaft may be in the range of 5 to 100 meters, preferably from 10 to 80 meters, such as about 60 meters.

As can further be seen in Fig. 2, during the roundtrip, the elevator car may additionally be stopped for some time(s) (the speed being zero) at some portions of the roundtrip, such as at the extreme points thereof (for example, at the bottommost and the topmost floors). These stopping portions do not qualify as the constant speed portions, since during the constant speed portions, an absolute value of the speed of the elevator car v_cs must be higher than zero.

Figure 3 illustrates schematically an elevator system 300 according to an embodiment of the present invention. The elevator system 300 comprises a hoisting motor 302, such as a permanent magnet electric motor, for moving an elevator car 310 comprised in the elevator system 300. The elevator car 310 may be mechanically coupled to the electric motor 302, preferably, by a hoisting rope 306. The operation of the electric motor 302 may be controlled by an electric converter 304 such as a frequency converter or an inverter. The elevator car 310 is moved in the elevator shaft 340 in the normal operation mode so as to serve landing floors 350.

The hoisting rope 306 may comprise, for example, steel or carbon fibers. The term 'hoisting rope' does not limit the form of the element anyhow. For example, the hoisting rope 306 may be implemented as a rope or a belt.

The hoisting motor 302 may be arranged in mechanical coupling with a traction sheave 308. Furthermore, the hoisting rope 304 may be arranged to run via the traction sheave 308 in order for the hoisting motor 302 to be able to move the elevator car 310 coupled to the hoisting rope 302. Still further, being connected to the hoisting rope 302, may preferably be a counterweight 314 for the elevator car 310. Although shown in Fig. 3 that the hoisting rope 306 would be attached from one end to the elevator car 310 and from the opposite end to the counterweight 314, and then simply running via the traction sheave 308, in practice, the hoisting rope 306 may run via one or several other sheaves and components, as known to a skilled person in the art. Thus, depending how the hoisting rope 306 is arranged to run, for example, past how many sheaves and how such configuration is designed and arranged, the roping ratio may be different from one elevator system 300 to another.

The elevator system 300 may comprise an elevator control unit 1000 for controlling the operation of the elevator system 300, such as various devices thereof. The elevator control unit 1000 may be a separate device or may be comprised in the other components of the elevator system 300 such as in or as a part of the electric converter 304. **In** various embodiments, the elevator control unit 1000 comprises the electric converter 304.

The elevator control unit 1000 may also be implemented in a distributed manner so that, e.g., one portion of the elevator control unit 1000 may be comprised in the electric converter 304 and another portion in the elevator car 310, for instance. The elevator control unit 1000 may also be arranged in distributed manner at more than two locations or in more than two devices. As can be seen in Fig. 3, the elevator control unit 1000 may be arranged to at least communicate (examples of such connections being shown with dashed two-headed arrows) with various devices of the elevator system 300.

The elevator system 300 may comprise an elevator brake arrangement 312 comprising an elevator brake, preferably, an electromechanical elevator brake.

Other elements, shown in Fig. 3 are a main electrical power supply 325 such as a three- or single-phase electrical power grid, an electrical connection 330 between the power supply 325 and the electric converter 304, another electrical connection 335 between the electric converter 304 and the electric motor 302.

## Claims

1. A method for determining a torque constant of a hoisting motor (302) of an elevator system (300), the method comprising:
performing (110) a roundtrip in an elevator shaft (340) by an elevator car (310) by utilizing the hoisting motor (302), wherein the roundtrip comprises a constant speed portion (21) in a first direction and a constant speed portion (22) in a opposite second direction,
determining (120) a motor current of the hoisting motor (302), such as recording samples thereof, during at least the constant speed portions,
determining (130) a mean value of the motor current in the constant speed portions (21, 22), and
determining (140) the torque constant based on the mean value, an elevator balance, and one or more mechanical parameters related to a force transmission between the hoisting motor (302) and the elevator car (310), wherein the one or more mechanical parameters include at least a traction sheave radius (Rts) and/or an elevator roping ratio.

2. The method of claim 1, wherein, in the constant speed portions (21, 22), the elevator car (310) is arranged to move past a middle point (H0) of the elevator shaft (340).

3. The method of claim 2, wherein, in the constant speed portions (21, 22), the elevator car (310) is arranged to move in the same section of the elevator shaft (340).

4. The method of any of claims 1-3, wherein the mechanical parameters include at least the traction sheave radius (Rts) and the elevator roping ratio.

5. The method of any of claims 1-4, wherein the elevator balance is a measure of imbalance between the elevator car (310) and its counterweight (314).

6. The method of any of claims 1-5, wherein said determining the torque constant, that is KTC, is based on the following equation: $KTC = \frac{Rts ⋅ \left|MB\right| ⋅ g}{\left(Im,mean⋅Rrope\right)} ,$ where Rts is the traction sheave radius, MB the elevator balance, g the gravitational acceleration, Im,mean the mean value of the motor current, and Rrope the elevator roping ratio.

7. The method of any of claims 1-6, wherein the mean value of motor current, that is Im,mean, is determined based on the following equation: $Im , mean = \frac{1}{K} {\sum }_{n = 1}^{K} Im , n ,$ where K is a number of samples of the motor current, that is Im,n, during the constant speed portions (21, 22).

8. The method of any of claims 1-7, comprising, prior to the determination (140) of the torque constant, determining the elevator balance based on at least a difference in electric power of the hoisting motor (302) between the constant speed portions (21, 22), preferably at or on average around the middle point (H0) of the elevator shaft (340).

9. The method of claim 8, wherein the elevator balance, that is MB, is determined based on the following equation: $MB = \frac{\left(Pme,mid,up-Pme,mid,down\right)}{\left(2⋅g⋅v_cs\right)} ,$ where Pme,mid,up is electric power of the hoisting motor during the constant speed portion in the first direction, Pme,mid,down is electric power of the hoisting motor during the constant speed portion in the second direction, g is the gravitational acceleration, and v_cs an absolute value of speed of the elevator car at the constant speed regions.

10. An elevator control unit (1000) comprising at least a processing unit and a memory, such as a processor and a non-transitory memory medium, and data receiving unit for receiving data including information about a motor current of a hoisting motor (302), **characterised in that** the elevator control unit (1000) is configured to:
perform (110) a roundtrip in an elevator shaft by an elevator car by utilizing the hoisting motor, wherein the roundtrip comprises a constant speed portion (21) in a first direction and a constant speed portion (22) in a opposite second direction, determine (120) a motor current of the hoisting motor (302), such as recording samples thereof, during at least the constant speed portions (21, 22),
determine (130) a mean value of the motor current in the constant speed portions (21, 22), and
determine (140) the torque constant based on the mean value, an elevator balance, and one or more mechanical parameters related to a force transmission between the hoisting motor (302) and the elevator car (310), wherein the one or more mechanical parameters include at least a traction sheave radius (Rts) and/or an elevator roping ratio.

11. The elevator control unit (1000) of claim 10, wherein the mechanical parameters include at least the traction sheave radius (Rts) and the elevator roping ratio.

12. The elevator control unit (1000) of claim 11, wherein said determining the torque constant, that is KTC, is based on the following equation: $KTC = \frac{Rts ⋅ \left|MB\right| ⋅ g}{\left(Im,mean⋅Rrope\right)} ,$ where Rts is the traction sheave radius, MB the elevator balance, g the gravitational acceleration, Im,mean the mean value of the motor current, and the elevator roping ratio.

13. The elevator control unit (1000) of any of claims 10-12, configured, prior to the determination (140) of the torque constant, to determine the elevator balance based on at least a difference in electric power of the hoisting motor (302) between the constant speed portions (21, 22), preferably at or on average around the middle point (H0) of the elevator shaft (140).

14. An elevator system (300), comprising:
an elevator car (310) movable in an elevator shaft (340) by a hoisting motor (302), and
an elevator control unit (1000) of any of claims 10-13.

15. A computer-readable memory medium comprising instructions which, when executed by a processing unit of an elevator control unit of any of claims 10-13, such as including one or several processors, cause the processing unit to carry out the method of any of claims 1-9.

## Patentansprüche

1. Verfahren zum Bestimmen einer Drehmomentkonstante eines Hubmotors (302) eines Aufzugssystems (300), wobei das Verfahren Folgendes umfasst:
Durchführen (110) eines Rundlaufs in einem Aufzugsschacht (340) durch eine Aufzugskabine (310) unter Verwendung des Hubmotors (302), wobei der Rundlauf einen Abschnitt mit konstanter Geschwindigkeit (21) in eine erste Richtung und einen Abschnitt mit konstanter Geschwindigkeit (22) in eine entgegengesetzte zweite Richtung umfasst,
Bestimmen (120) eines Motorstroms des Hubmotors (302), zum Beispiel Aufzeichnen von Stichproben davon, zumindest während der Abschnitte konstanter Geschwindigkeit,
Bestimmen (130) eines Mittelwerts des Motorstroms in den Abschnitten konstanter Geschwindigkeit (21, 22) und
Bestimmen (140) der Drehmomentkonstante basierend auf dem Mittelwert, einem Aufzugsgleichgewicht und einem oder mehreren mechanischen Parametern bezüglich einer Kraftübertragung zwischen dem Hubmotor (302) und der Aufzugskabine (310), wobei der eine oder die mehreren mechanischen Parameter mindestens einen Traktionsscheibenradius (Rts) und/oder ein Aufzugsseilverhältnis beinhalten.

2. Verfahren nach Anspruch 1, wobei die Aufzugskabine (310) in den Abschnitten konstanter Geschwindigkeit (21, 22) dazu angeordnet ist, sich an einem Mittelpunkt (H0) des Aufzugsschachts (340) vorbei zu bewegen.

3. Verfahren nach Anspruch 2, wobei die Aufzugskabine (310) in den Abschnitten konstanter Geschwindigkeit (21, 22) dazu angeordnet ist, sich in demselben Abschnitt des Aufzugsschachts (340) zu bewegen.

4. Verfahren nach einem der Ansprüche 1-3, wobei die mechanischen Parameter zumindest den Traktionsscheibenradius (Rts) und das Aufzugsseilverhältnis beinhalten.

5. Verfahren nach einem der Ansprüche 1-4, wobei das Aufzugsgleichgewicht ein Maß für ein Ungleichgewicht zwischen der Aufzugskabine (310) und ihrem Gegengewicht (314) ist.

6. Verfahren nach einem der Ansprüche 1-5, wobei das Bestimmen der Drehmomentkonstante, KTC, auf der folgenden Gleichung basiert: $KTC = \frac{Rts ⋅ \left|MB\right| ⋅ g}{\left(Im,mean⋅Rrope\right)} ,$ wobei Rts der Traktionsscheibenradius, MB das Aufzugsgleichgewicht, g die Erdbeschleunigung, Im,mean der Mittelwert des Motorstroms und Rrope das Aufzugsseilverhältnis ist.

7. Verfahren nach einem der Ansprüche 1-6, wobei der Mittelwert des Motorstroms, Im,mean, basierend auf der folgenden Gleichung bestimmt wird: $Im , mean \frac{1}{K} \sum \frac{K}{n = 1} Im , n ,$ wobei K eine Anzahl von Stichproben des Motorstroms, Im,n, während der Abschnitte konstanter Geschwindigkeit (21, 22) ist.

8. Verfahren nach einem der Ansprüche 1-7, das vor dem Bestimmen (140) der Drehmomentkonstante das Bestimmen des Aufzugsgleichgewichts basierend auf zumindest einer Differenz der elektrischen Leistung des Hubmotors (302) zwischen den Abschnitten konstanter Geschwindigkeit (21, 22), vorzugsweise am oder im Durchschnitt um den Mittelpunkt (H0) des Aufzugsschachts (340), umfasst.

9. Verfahren nach Anspruch 8, wobei das Aufzugsgleichgewicht, MB, basierend auf der folgenden Gleichung bestimmt wird: $MB = \frac{\left(Pme,mid,up-Pme,mid,down\right.}{\left(2⋅g⋅v_cs\right)} ,$ wobei Pme,mid,up die elektrische Leistung des Hubmotors während des Abschnitts konstanter Geschwindigkeit in die erste Richtung ist, Pme,mid,down die elektrische Leistung des Hubmotors während des Abschnitts konstanter Geschwindigkeit in die zweite Richtung ist, g die Erdbeschleunigung ist und v_cs ein Absolutwert der Geschwindigkeit der Aufzugskabine in den Bereichen konstanter Geschwindigkeit ist.

10. Aufzugssteuereinheit (1000), umfassend mindestens eine Verarbeitungseinheit und einen Speicher, zum Beispiel einen Prozessor und ein nichtflüchtiges Speichermedium, und eine Datenempfangseinheit zum Empfangen von Daten, die Informationen über einen Motorstrom eines Hubmotors (302) beinhalten, **dadurch gekennzeichnet, dass** die Aufzugssteuereinheit (1000) zu Folgendem ausgelegt ist:
Durchführen (110) eines Rundlaufs in einem Aufzugsschacht durch eine Aufzugskabine unter Verwendung des Hubmotors, wobei der Rundlauf einen Abschnitt mit konstanter Geschwindigkeit (21) in eine erste Richtung und einen Abschnitt mit konstanter Geschwindigkeit (22) in eine entgegengesetzte zweite Richtung umfasst, Bestimmen (120) eines Motorstroms des Hubmotors (302), zum Beispiel Aufzeichnen von Stichproben davon, zumindest während der Abschnitte konstanter Geschwindigkeit (21, 22),
Bestimmen (130) eines Mittelwerts des Motorstroms in den Abschnitten konstanter Geschwindigkeit (21, 22) und
Bestimmen (140) der Drehmomentkonstante basierend auf dem Mittelwert, einem Aufzugsgleichgewicht und einem oder mehreren mechanischen Parametern bezüglich einer Kraftübertragung zwischen dem Hubmotor (302) und der Aufzugskabine (310), wobei der eine oder die mehreren mechanischen Parameter mindestens einen Traktionsscheibenradius (Rts) und/oder ein Aufzugsseilverhältnis beinhalten.

11. Aufzugssteuereinheit (1000) nach Anspruch 10, wobei die mechanischen Parameter zumindest den Traktionsscheibenradius (Rts) und das Aufzugsseilverhältnis beinhalten.

12. Aufzugssteuereinheit (1000) nach Anspruch 11, wobei das Bestimmen der Drehmomentkonstante, KTC, auf der folgenden Gleichung basiert: $KTC = \frac{Rts ⋅ \left|MB\right| ⋅ g}{\left(Im,mean⋅Rrope\right)} ,$ wobei Rts der Traktionsscheibenradius, MB das Aufzugsgleichgewicht, g die Erdbeschleunigung, Im,mean der Mittelwert des Motorstroms und Rrope das Aufzugsseilverhältnis ist.

13. Aufzugssteuereinheit (1000) einem der Ansprüche 10-12, das vor dem Bestimmen (140) der Drehmomentkonstante das Bestimmen des Aufzugsgleichgewichts basierend auf zumindest einer Differenz der elektrischen Leistung des Hubmotors (302) zwischen den Abschnitten konstanter Geschwindigkeit (21, 22), vorzugsweise am oder im Durchschnitt um den Mittelpunkt (H0) des Aufzugsschachts (140), umfasst.

14. Aufzugssystem (300), umfassend:
eine Aufzugskabine (310), die durch einen Hubmotor (302) in einem Aufzugsschacht (340) beweglich ist, und
eine Aufzugssteuereinheit (1000) nach einem der Ansprüche 10-13.

15. Computerlesbares Speichermedium, das Anweisungen umfasst, die, wenn sie von einer Verarbeitungseinheit einer Aufzugssteuereinheit nach einem der Ansprüche 10-13, die zum Beispiel einen oder mehrere Prozessoren beinhaltet, ausgeführt werden, bewirken, dass die Verarbeitungseinheit das Verfahren nach einem der Ansprüche 1-9 ausführt.

## Revendications

1. Procédé pour déterminer une constante de couple d'un moteur de levage (302) d'un système d'ascenseur (300), le procédé comprenant :
la réalisation (110) d'un déplacement d'aller-retour dans une cage d'ascenseur (340) par une cabine d'ascenseur (310) en utilisant le moteur de levage (302), dans lequel le déplacement d'aller-retour comprend une partie de vitesse constante (21) dans une première direction et une partie de vitesse constante (22) dans une seconde direction opposée,
la détermination (120) d'un courant de moteur du moteur de levage (302), par exemple l'enregistrement d'échantillons de celui-ci, durant au moins les parties de vitesse constante,
la détermination (130) d'une valeur moyenne du courant de moteur dans les parties de vitesse constante (21, 22), et
la détermination (140) de la constante de couple sur la base de la valeur moyenne, d'un équilibre d'ascenseur, et d'un ou de plusieurs paramètres mécaniques connexes à une transmission de force entre le moteur de levage (302) et la cabine d'ascenseur (310), dans lequel l'un ou les plusieurs paramètres mécaniques incluent au moins un rayon de poulie de traction (Rts) et/ou un rapport de câble d'ascenseur.

2. Procédé de la revendication 1, dans lequel, dans les parties de vitesse constante (21, 22), la cabine d'ascenseur (310) est agencée pour se mouvoir au-delà d'un point médian (H0) de la cage d'ascenseur (340).

3. Procédé de la revendication 2, dans lequel, dans les parties de vitesse constante (21, 22), la cabine d'ascenseur (310) est agencée pour se mouvoir dans la même section de la cage d'ascenseur (340).

4. Procédé de quelconques des revendications 1 à 3, dans lequel les paramètres mécaniques incluent au moins le rayon de poulie de traction (Rts) et le rapport de câble d'ascenseur.

5. Procédé de quelconques des revendications 1 à 4, dans lequel l'équilibre d'ascenseur est une mesure de déséquilibre entre la cabine d'ascenseur (310) et son contrepoids (314).

6. Procédé de quelconques des revendications 1 à 5, dans lequel ladite détermination de la constante de couple, qui est KTC, est basée sur l'équation suivante : $KTC = \frac{Rts ⋅ \left|MB\right| ⋅ g}{\left(Im,mean⋅Rrope\right)} ,$ où Rts est le rayon de poulie de traction, MB l'équilibre d'ascenseur, g l'accélération gravitationnelle, Im,mean la valeur moyenne du courant de moteur, et Rrope le rapport de câble d'ascenseur.

7. Procédé de quelconques des revendications 1 à 6, dans lequel la valeur moyenne de courant de moteur, qui est Im,mean, est déterminée sur la base de l'équation suivante : $Im , mean \frac{1}{K} \sum \frac{K}{n = 1} Im , n ,$ où K est un nombre d'échantillons du courant de moteur, qui est Im,n, durant les parties de vitesse constante (21, 22).

8. Procédé de quelconques des revendications 1 à 7, comprenant, avant la détermination (140) de la constante de couple, la détermination l'équilibre d'ascenseur sur la base au moins d'une différence de puissance électrique du moteur de levage (302) entre les parties de vitesse constante (21, 22), de préférence au point médian (H0), ou en moyenne autour de celui-ci, de la cage d'ascenseur (340).

9. Procédé de la revendication 8, dans lequel l'équilibre d'ascenseur, qui est MB, est déterminé sur la base de l'équation suivante : $MB = \frac{\left(Pme,mid,up-Pme,mid,down\right.}{\left(2⋅g⋅v_cs\right)} ,$ où Pme,mid,up est la puissance électrique du moteur de levage durant la partie de vitesse constante dans la première direction, Pme,mid,down est la puissance électrique du moteur de levage durant la partie de vitesse constante dans le seconde direction, g est l'accélération gravitationnelle, et v_cs une valeur absolue de vitesse de la cabine d'ascenseur aux régions de vitesse constante.

10. Unité de commande d'ascenseur (1000) comprenant au moins une unité de traitement et une mémoire, par exemple un processeur et un support de mémoire non transitoire, et une unité de réception de données destinée à recevoir des données incluant des informations concernant un courant de moteur d'un moteur de levage (302), **caractérisée en ce que** l'unité de commande d'ascenseur (1000) est configurée pour :
réaliser (110) un déplacement d'aller-retour, dans une cage d'ascenseur, par le biais d'un cabine d'ascenseur, en utilisant le moteur de levage, dans laquelle le déplacement d'aller-retour comprend une partie de vitesse constante (21) dans une première direction et une partie de vitesse constante (22) dans une seconde direction opposée, déterminer (120) un courant de moteur du moteur de levage (302), par exemple l'enregistrement d'échantillons de celui-ci, durant au moins les parties de vitesse constante (21, 22),
déterminer (130) une valeur moyenne du courant de moteur dans les parties de vitesse constante (21, 22), et
déterminer (140) la constante de couple sur la base de la valeur moyenne, d'un équilibre d'ascenseur, et d'un ou de plusieurs paramètres mécaniques connexes à une transmission de force entre le moteur de levage (302) et la cabine d'ascenseur (310), dans laquelle l'un ou les plusieurs paramètres mécaniques incluent au moins un rayon de poulie de traction (Rts) et/ou un rapport de câble d'ascenseur.

11. Unité de commande d'ascenseur (1000) de la revendication 10, dans laquelle les paramètres mécaniques incluent au moins le rayon de poulie de traction (Rts) et le rapport de câble d'ascenseur.

12. Unité de commande d'ascenseur (1000) de la revendication 11, dans laquelle ladite détermination de la constante de couple, qui est KTC, est basée sur l'équation suivante : $KTC = \frac{Rts ⋅ \left|MB\right| ⋅ g}{\left(Im,mean⋅Rrope\right)} ,$ où Rts est le rayon de poulie de traction, MB l'équilibre d'ascenseur, g l'accélération gravitationnelle, Im,mean la valeur moyenne du courant de moteur, et le rapport de câble d'ascenseur.

13. Unité de commande d'ascenseur (1000) de quelconques des revendications 10 à 12, configurée, avant la détermination (140) de la constante de couple, pour déterminer l'équilibre d'ascenseur sur la base au moins d'une différence de puissance électrique du moteur de levage (302) entre les parties de vitesse constante (21, 22), de préférence au point médian (H0), ou en moyenne autour de celui-ci, de la cage d'ascenseur (140).

14. Système d'ascenseur (300), comprenant :
une cabine d'ascenseur (310) pouvant être mue dans une cage d'ascenseur (340) par un moteur de levage (302), et une unité de commande d'ascenseur (1000) de quelconques des revendications 10 à 13.

15. Support de mémoire lisible par ordinateur, comprenant des instructions qui, lorsqu'elles sont exécutées par une unité de traitement d'une unité de commande d'ascenseur de quelconques des revendications 10 à 13, par exemple incluant un ou plusieurs processeurs, amènent l'unité de traitement à effectuer le procédé de quelconques des revendications 1 à 9.
